# EUROPÄISCHE PATENTSCHRIFT

(11) **EP 1 419 117 B1**
(45) Veröffentlichungstag und Bekanntmachung des Hinweises auf die Patenterteilung: **05.01.2005**
(21) Anmeldenummer: 02767095.9
(22) Anmeldetag: 13.08.2002
(51) Int. Cl.: C03B 23/13, C03B 23/043, C03B 23/045, C03B 23/09, H01J 9/24, H01J 9/40, H01J 61/82

(54) **VERFAHREN ZUR HERSTELLUNG EINES VERSCHLUSSES EINES HOHLRAUMS EINER GLASRÖHRE**
METHOD FOR THE PRODUCTION OF A CLOSURE OF A HOLLOW AREA IN A GLASS TUBE
PROCEDE DE PRODUCTION D'UNE FERMETURE D'ESPACE CREUX D'UN TUBE DE VERRE

(30) Priorität: 13.08.2001 DE 10138628
(43) Veröffentlichungstag der Anmeldung: 19.05.2004
(73) Patentinhaber: ROBERT BOSCH GMBH, 70442 Stuttgart (DE)
(72) Erfinder: KRAMP, Ralf, 72760 Reutlingen (DE); GORILLE, Ingo, 71739 Oberriexingen (DE)
(74) Vertreter: Graefe, Jörg
(86) Internationale Anmeldenummer: PCT/DE2002/002979
(87) Internationale Veröffentlichungsnummer: WO 2003/016231

(56) Entgegenhaltungen:
- EP-A- 1 024 515
- DE-A- 10 032 941
- GB-A- 2 105 320
- US-A- 3 698 784
- US-A- 4 045 201
- US-A- 5 984 749

## Beschreibung

### Stand der Technik

Die Erfindung geht aus von einem Verfahren zur Herstellung eines Verschlusses eines Hohlraums einer Glasröhre nach der Gattung des Anspruchs 1.

Ein solches Verfahren wird beispielsweise bei der Herstellung einer als Brenner einer Entladungslampe dienenden Glasröhre angewandt. Im Hohlraum befinden sich dabei Füllstoffe, unter anderem wenigstens ein gasförmiger Füllstoff, unter einem höheren Druck als Atmosphärendruck. Um bei dem erforderlichen Druck des im Hohlraum befindlichen gasförmigen Füllstoffs einen Verschluß des Hohlraums zu erreichen, wird der gasförmige Füllstoff mittels flüssigem Stickstoff, der auf der schon geschlossenen Seite des Hohlraums den Glaskörper umgibt, stark gekühlt, so daß dieser in den festen Aggregatzustand übergeht und im Hohlraum nur ein geringer Druck oder ein Vakuum herrscht. Die Glasröhre wird anschließend auf der noch nicht geschlossenen Seite des Hohlraums mit einer Wasserstoffflamme erhitzt, bis das Glas schmilzt und durch den höheren Umgebungsdruck und durch Metallbacken zusammengequetscht wird. Dieses Verfahren ist sehr aufwendig und schwierig zu beherrschen, da das Schmelzen der Glasröhre in geringem zeitlichem Abstand von der Kühlung mittels des Stickstoffes und die Quetschung sehr schnell erfolgen müssen, da durch die Erwärmung der Druck des gasförmigen Füllstoffes wieder ansteigt. Wegen der Wasserstoffflamme sind außerdem umfangreiche Sicherheitsvorkehrungen zu treffen.

### Vorteile der Erfindung

Das erfindungsgemäße Verfahren mit den Merkmalen gemäß Anspruch 1 hat demgegenüber den Vorteil, daß dieses einfacher durchzuführen ist, da keine Kühlung des gasförmigen Füllstoffes erforderlich ist und zur Herstellung des Verschlusses des Hohlraums nur mittels der Heizeinrichtung die Glasröhre geschmolzen zu werden braucht, wobei durch den beliebig einstellbaren Differenzdruck zwischen dem Arbeitsraum und dem Hohlraum der Glasröhre diese an der Schmelzstelle zusammengepresst wird.

In den abhängigen Ansprüchen sind vorteilhafte Ausgestaltungen und Weiterbildungen des erfindungsgemäßen Verfahrens angegeben. Die Merkmale gemäß Anspruch 6 ermöglichen auf einfache Weise die Erzeugung des hohen Druckes im Arbeitsraum und verhindern außerdem eine Schädigung der Glasröhre sowie eine Verzunderung der Heizeinrichtung. Die Merkmale gemäß Anspruch 7 ermöglichen auf einfache Weise eine Steuerung der Heizeinrichtung.

### Zeichnung

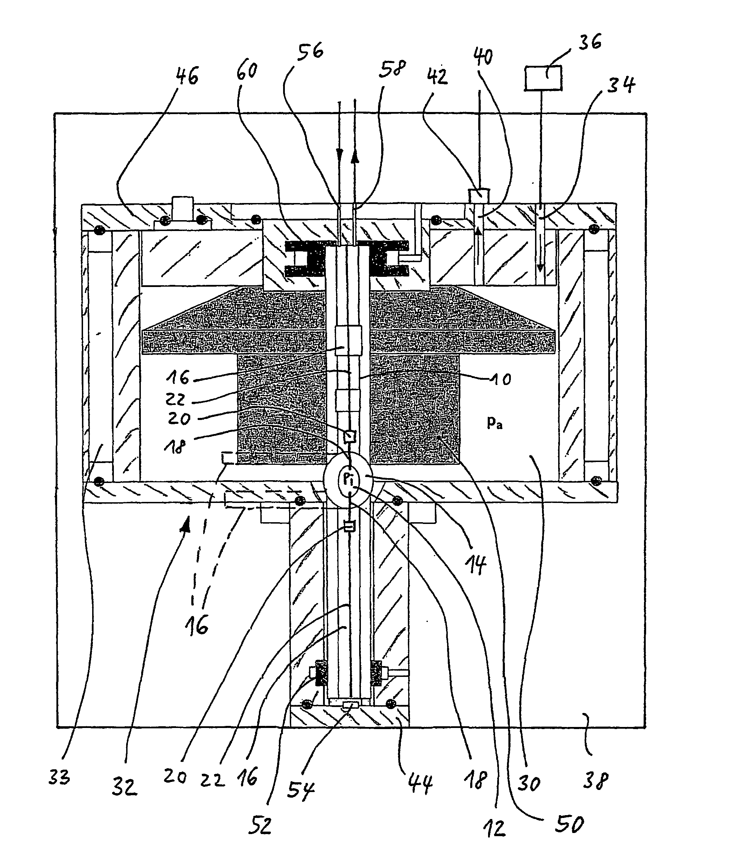

Ein Ausführungsbeispiel der Erfindung ist in der Zeichnung dargestellt und in der nachfolgenden Beschreibung näher erläutert. Es zeigen Figur 1 eine Vorrichtung zur Durchführung des erfindungsgemäßen Verfahrens in schematischer Darstellung.

### Beschreibung des Ausführungsbeispiels

In der Figur ist eine Vorrichtung zur Durchführung eines Verfahrens zur Herstellung eines Verschlusses eines Hohlraums 12 einer Glasröhre 10. Die Glasröhre 10 bildet vorzugsweise einen Brenner einer Entladungslampe, die insbesondere als Lichtquelle in Beleuchtungseinrichtungen von Kraftfahrzeugen verwendet wird. Die Glasröhre 10 besteht aus Quarzglas und weist in Richtung ihrer Längsachse betrachtet etwa in ihrem mittleren Bereich eine Verdickung 14 auf, in der der Hohlraum 12 gebildet ist. An die Verdickung 14 schließen sich beiderseits rohrförmige Abschnitte 16 mit kleinerem Querschnitt als die Verdickung 14 an. In den rohrförmigen Abschnitten 16 ist jeweils eine Elektrode 18 angeordnet, die mit ihren einen Enden in den Hohlraum 12 ragen und die an ihren anderen Enden mit einer in den rohrförmigen Abschnitten 16 angeordneten Metallfolie 20 verbunden ist. Die Elektroden 18 bestehen vorzugsweise aus Wolfram oder einer Wolfram-Legierung und die Metallfolien 20 bestehen vorzugsweise aus Molybdän oder einer Molybdän-Legierung. Mit den Metallfolien 20 sind jeweils elektrische Leitungen 22 verbunden, die in den rohrförmigen Abschnitten 16 verlaufen. Die Leitungen 22 bestehen vorzugsweise aus Molybdän oder einer Molybdän-Legierung.

Im Hohlraum 12 sind verschiedene Füllstoffe angeordnet, unter anderem Quecksilber. Außerdem sind Iod-Salze, das sind Metallhalogenide als Füllstoffe enthalten. Außerdem ist ein gasförmiger Füllstoff, vorzugsweise ein Edelgas enthalten. Als Edelgas wird vorzugsweise Xenon verwendet, wobei jedoch auch Argon oder Krypton verwendet werden kann. Das Xenon ist mit einem Druck von etwa 7 bar bei Raumtemperatur im Hohlraum 12 enthalten und dient dazu, beim Starten und Anlaufen der Entladungslampe eine schnelle Lichterzeugung sicherzustellen. Nach dem Anlaufen der Entladungslampe erfolgt die Lichterzeugung im wesentlichen durch das Quecksilber, wobei die Lichtfarbe durch die Iod-Salze beeinflußt werden kann.

Bei der Herstellung des Brenners wird zunächst die Glasröhre 10 aus Quarzglas vorgeformt mit der Verdickung 14 und den rohrförmigen Abschnitten 16. Durch die rohrförmigen Abschnitte 16 werden die Elektroden 18, die Folien 20 sowie die Leitungen 22 eingeführt. Die festen oder flüssigen Füllstoffe, das ist das Quecksilber und die Iod-Salze, werden in den Hohlraum 12 in der erforderlichen Menge eingebracht. Anschließend muß in den Hohlraum 12 noch der gasförmige Füllstoff mit dem erforderlichen Druck pi in Form des Xenons eingebracht werden und der Hohlraum 12 muß verschlossen werden. Nachfolgend wird die Vorrichtung und das Verfahren hierzu näher erläutert.

Zur Einbringung des gasförmigen Füllstoffes und zur Herstellung des Verschlusses des Hohlraums 12 der Glasröhre 10 wird die Glasröhre 10 in einen Arbeitsraum 30 eingebracht, in dem ein gegenüber dem im Hohlraum 12 herrschenden Druck pi erhöhter Druck pa erzeugt wird. Der Druck pa im Arbeitsraum 30 wird derart eingestellt, daß dieser wenigstens 1 bar höher ist als der im Hohlraum 12 herrschende Druck pi. Vorzugsweise wird der Druck pa im Arbeitsraum 30 derart eingestellt, daß dieser wesentlich höher ist als der Druck pi im Hohlraum 12. Die Differenz zwischen dem Druck pa im Arbeitsraum 30 und dem Druck pi im Hohlraum 12 wird abhängig vom Material der Glasröhre 10 und abhängig von den erforderlichen Eigenschaften des fertigen Brenners gewählt. Es kann dabei auch vorgesehen sein, daß der Druck pa im Arbeitsraum 30 variabel eingestellt wird während der Befüllung des Hohlraums 12 mit dem gasförmigen Füllstoff und während der Herstellung des Verschlusses des Hohlraums 12.

Der Arbeitsraum 30 ist durch ein Gehäuse 32 begrenzt, das annähernd topfförmig ausgebildet ist und das einen flüssigkeitsgefüllten Mantel 33 zur Kühlung aufweist. Dem Arbeitsraum 30 wird vorzugsweise ein Edelgas, beispielsweise Helium, als Füllung zugeführt, durch das der erhöhte Druck pa im Arbeitsraum 30' erzeugt wird. Das Gehäuse 32 weist hierzu wenigstens eine Öffnung 34 auf, durch die von außerhalb beispielsweise mittels einer Pumpe oder aus einem Druckspeicher 36 das Edelgas zugeführt wird. Das Gehäuse 32 ist vorzugsweise in einem weiteren abgeschlossenen Raum 38 angeordnet, der ebenfalls mit Edelgas, beispielsweise Argon, gefüllt ist, in dem jedoch ein geringerer Druck herrscht als im Arbeitsraum 30. Die Füllung des Raums 38 mit Edelgas dient dazu, die Füllstoffe des Hohlraums 12 vor einer Reaktion mit Sauerstoff zu schützen. Das Gehäuse 32 kann außerdem wenigstens eine Auslaßöffnung 40 aufweisen, die beispielsweise mittels eines Ventils 42 gesteuert wird, durch das der im Arbeitsraum 30 herrschende Druck pa begrenzt werden kann. Das Gehäuse 32 kann einen separaten Boden 44 und Deckel 46 aufweisen, die dicht mit dem übrigen Gehäuse 32 verbunden sind, die jedoch zur Anordnung der Glasröhre 10 im Arbeitsraum 30 und zu deren Entfernung vom Gehäuse 32 getrennt werden können.

Im Arbeitsraum 30 ist eine Heizeinrichtung 50 angeordnet, die vorzugsweise eine elektrische Heizeinrichtung ist. Alternativ kann auch ein Plasma-Brenner als Heizeinrichtung verwendet werden. Die Heizeinrichtung 50 wird mit einer Gleichspannung betrieben und ist niederohmig ausgebildet. Die Heizeinrichtung 50 besteht vorzugsweise aus Graphit, Tantal, Molybdän, Osmium, Rhenium oder Wolfram oder aus einer Mischung mehrerer dieser Stoffe. Die Heizeinrichtung 50 ist zumindest annähernd hohlzylinderförmig ausgebildet, so daß diese bei im Arbeitsraum 30 angeordneter Glasröhre 10 wenigstens einen von deren rohrförmigen Abschnitten 16 umgibt.

Wenn die Glasröhre 10 mit dem Hohlraum 12 in unverschlossenem Zustand im Arbeitsraum 30 angeordnet wird, so kann auf einer Seite des Hohlraums 12 der rohrförmige Abschnitt 16 ohne Füllung des Hohlraums 12 mit dem Xenon verschlossen werden. Der Hohlraum 12 kann dabei mit dem Raum 38 verbunden sein, so daß in diesem derselbe Druck wie im Raum 38 herrscht. Nahe dem dem Hohlraum 12 abgewandten Ende des rohrförmigen Abschnitts 16 der Glasröhre 10 ist zwischen dem Boden 44 des Gehäuses 32 und dem Abschnitt 16 eine Dichtung 52 angeordnet, durch die der Arbeitsraum 30 abgedichtet wird. Zum Verschließen des rohrförmigen Abschnitts 16 der Glasröhre 10 wird die Heizeinrichtung 50 mit Spannung versorgt. Die elektrische Leistung wird durch Strahlung und über das im Arbeitsraum 30 befindliche Edelgas auch durch Wärmeleitung auf den Abschnitt 16 übertragen. Der rohrförmige Abschnitt 16 der Glasröhre 10 wird dabei so stark erwärmt, daß das Glas schmilzt. Durch den im Arbeitsraum 30 herrschenden Druck pa wird der rohrförmige Abschnitt 16 im geschmolzenen Zustand zusammengepresst, so daß insbesondere die Metallfolie 20, aber auch Teile der Elektrode 18 und der Leitung 22 vom Glas umschlossen werden und der Hohlraum 12 verschlossen wird. Anschließend wird die Glasröhre 10 abgekühlt, so daß das Glas im Bereich des rohrförmigen Abschnitts 16 wieder erstarrt.

Vorzugsweise ist vorgesehen, daß mittels einer Sensoreinrichtung 54 der Zustand des rohrförmigen Abschnitts 16 der Glasröhre 10 während der Erwärmung erfaßt wird. Als Sensoreinrichtung 54 kann dabei eine Photosensoreinrichtung verwendet werden, die am Stirnende des rohrförmigen Abschnitts 16 angeordnet ist. Durch die Photosensoreinrichtung 54 wird die Lichtintensität des Abschnitts 16 bei dessen Erwärmung erfaßt, die proportional zur Temperatur des Abschnitts 16 ist und daher zur indirekten Messung der Temperatur des Quarzglases des Abschnitts 16 verwendet werden kann. Eine Eichung der Photosensoreinrichtung 54 bezüglich charakteristischer Werte der Glastemperatur des Abschnitts 16 kann während eines Versuchsbetriebs anhand praktischer Ergebnisse vorgenommen werden. Das durch die Sensoreinrichtung 54 erzeugte Signal wird für die Steuerung der Heizeinrichtung 50 verwendet, so daß die Erwärmung des Abschnitts 16 durch entsprechende Steuerung der Heizleistung der Heizeinrichtung 50 optimal erfolgen kann. Die Heizleistung der Heizeinrichtung 50 ist außerdem abhängig von der Dicke des rohrförmigen Abschnitts 16, das heißt von der Masse an Glas die erwärmt und geschmolzen werden muß.

Der Druck pa im Arbeitsraum 30 wird durch entsprechende Zuführung von Edelgas durch die Öffnung 34 auf einen vorgegebenen Wert eingestellt. Wenn der Druck pa beim Betrieb der Heizeinrichtung 50 ansteigt, so kann dieser begrenzt werden, indem durch die Auslaßöffnung 40 gegebenenfalls gesteuert durch das Ventil 42 Gas aus dem Arbeitsraum 30 abgeführt wird.

Wenn bei der Glasröhre 10 an einer Seite des Hohlraums 12 der rohrförmige Abschnitt 16 wie vorstehend beschrieben verschlossen ist, so wird anschließend auch auf der anderen Seite des Hohlraums 12 der rohrförmige Abschnitt 16 verschlossen. Der Deckel 46 weist wenigstens eine erste Öffnung 56 auf, durch die dem Hohlraum 12 das Edelgas, vorzugsweise Xenon, unter dem erforderlichen Druck zugeführt wird. Der Deckel 46 des Gehäuses 32 weist außerdem wenigstens eine zweite Öffnung 58 auf, durch die eine Evakuierung des Hohlraums 12 mittels einer Vakuumpumpe erfolgt. Die Evakuierung des Hohlraums 12 dient dazu, eine Vermischung des Xenongases mit anderen Komponenten im Hohlraum 12 zu verhindern. Zwischen dem Deckel 46 und dem rohrförmigen Abschnitt 16 der Glasröhre 10 ist nahe deren dem Hohlraum 12 abgewandtem Ende eine Dichtung 60 angeordnet, durch die der Arbeitsraum 30 abgedichtet wird. Während im Hohlraum 12 der erforderliche Druck pi für das Xenon aufrechterhalten wird, wird die Heizeinrichtung 50 aktiviert, so daß das Glas im rohrförmigen Abschnitt 16 schmilzt und durch den gegenüber dem im Hohlraum 12 herrschenden Druck pi deutlich höheren Druck pa' im Arbeitsraum 30 zusammengepresst wird. Anschließend wird die Glasröhre 10 abgekühlt, so daß das Glas wieder erstarrt und die Elektrode 18, die Metallfolie 20 sowie die Leitung 22 im Abschnitt 16 eingeschlossen sind und der Hohlraum 12 verschlossen ist. Zur Steuerung der Heizeinrichtung 50 kann dieselbe Sensoreinrichtung 54 wie beim anderen rohrförmigen Abschnitt 16 der Glasröhre 10 oder eine separate Sensoreinrichtung verwendet werden. Vorzugsweise wird bei der Herstellung des Verschlusses beider rohrförmigen Abschnitte 16 der Glasröhre 10 zumindest annähernd dieselbe Druckdifferenz zwischen dem Arbeitsraum 30 und dem Hohlraum 12 eingestellt, um gleiche Verhältnisse für beide Abschnitte 16 zu erhalten.

Die Befüllung des Hohlraums 12 mit den Füllstoffen findet im Raum 38 statt und die Herstellung des Verschlusses des Hohlraums 12 erfolgt im Arbeitsraum 30, der innerhalb des weiteren Raums 38 angeordnet ist. Die Steuerung des Drucks pa im Arbeitsraum 30 und der Heizleistung der Heizeinrichtung 50 kann auf einfache Weise erfolgen, so daß ein sicherer Verschluß des Hohlraums 12 hergestellt werden kann. Das Quarzglas, aus dem die Glasröhre 10 besteht, wird vor der Verwendung zur Herstellung der Glasröhre 10 über einen relativ langen Zeitraum vakuum-geglüht, um es frei von H2 und OH-Gruppen zu machen. Bei der vorstehend erläuterten Weiterverarbeitung im Arbeitsraum 30 verbleibt die Glasröhre 10 in diesem Zustand, da sie nicht mehr in Kontakt mit H2 oder OH-Gruppen kommt. Bei der Befüllung des Hohlraums 12 kann sehr einfach auch auf andere Füllstoffe gewechselt werden, wobei als Edelgas beispielsweise anstelle von Xenon auch Argon verwendet werden kann, ohne daß das Verfahren geändert werden muß.

Es kann auch vorgesehen sein, daß der Verschluß des Hohlraums 12 an den rohrförmigen Abschnitten 16 auf beiden Seiten gleichzeitig erfolgt, wobei hierzu eine gemeinsame oder getrennte Heizeinrichtungen 50 verwendet werden kann. Es kann dabei vorteilhaft sein, wenn die rohrförmigen Abschnitte 16 der Glasröhre 10 nicht wie in der Figur mit durchgezogenen Linien dargestellt beidseits des Hohlraums 12 etwa koaxial zueinander angeordnet sind, sondern auf derselben Seite des Hohlraums 12 wie dies in der Figur mit gestrichelten Linien angedeutet ist.

## Patentansprüche

1. Verfahren zur Herstellung eines Verschlusses eines Hohlraums (12) einer Glasröhre (10), wobei sich im Hohlraum (12) unter höherem Druck als Atmosphärendruck stehende Füllstoffe befinden, **dadurch gekennzeichnet, daß** die Glasröhre (10) in einem Arbeitsraum (30) angeordnet wird, in dem ein gegenüber dem im Hohlraum (12) herrschenden Druck höherer Druck erzeugt wird und daß im Arbeitsraum (30) eine Heizeinrichtung (50) angeordnet ist, die die Glasröhre (10) in einem sich wenigstens auf einer Seite an den Hohlraum (12) anschließenden Abschnitt (16) umgibt und mittels der der Abschnitt (16) geschmolzen und in geschmolzenem Zustand durch den im Arbeitsraum (30) herrschenden Druck zusammengepresst wird, so daß der Hohlraum (12) auf wenigstens einer Seite verschlossen wird.

2. Verfahren nach Anspruch 1, **dadurch gekennzeichnet, daß** dem Hohlraum (12) während der Herstellung des Verschlusses von außerhalb des Arbeitsraums (30) ein gasförmiger Füllstoff unter dem erforderlichen Druck zugeführt wird.

3. Verfahren nach Anspruch 2, **dadurch gekennzeichnet, daß** als gasförmiger Füllstoff ein Edelgas, vorzugsweise Xenon, Argon oder Krypton unter einem Druck von wenigstens etwa 7 bar zugeführt wird.

4. Verfahren nach einem der Ansprüche 1 bis 3, **dadurch gekennzeichnet, daß** die Heizeinrichtung (50) eine elektrische Heizeinrichtung ist.

5. Verfahren nach Anspruch 4, **dadurch gekennzeichnet, daß** die Heizeinrichtung (50) alternativ aus Graphit, Tantal, Molybdän, Osmium, Rhenium oder Wolfram oder aus einer Mischung dieser Materialen besteht.

6. Verfahren nach einem der vorstehenden Ansprüche, **dadurch gekennzeichnet, daß** dem Arbeitsraum (30) ein Edelgas, vorzugsweise Helium, zugeführt wird.

7. Verfahren nach einem der vorstehenden Ansprüche, **dadurch gekennzeichnet, daß** eine Sensoreinrichtung (54) vorgesehen ist, durch die der Zustand der Glasröhre (10) in dem zu schmelzenden Bereich (16) erfaßt wird und durch die ein zur Temperatur dieses Bereichs (16) proportionales Signal erzeugt wird, das zur Steuerung der Heizleistung der Heizeinrichtung (50) verwendet wird.

8. Verfahren nach einem der vorstehenden Ansprüche, **dadurch gekennzeichnet, daß** die Steuerung der Heizleistung der Heizeinrichtung (50) abhängig von der Wandstärke des zu schmelzenden Bereichs (16) der Glasröhre (10) erfolgt.

9. Verfahren nach einem der vorstehenden Ansprüche, **dadurch gekennzeichnet, daß** der im Arbeitsraum (30) herrschende Druck und/oder die Heizleistung der Heizeinrichtung (50) während der Herstellung des Verschlusses des Hohlraums (12) variabel gesteuert wird.

10. Verfahren nach einem der vorstehenden Ansprüche, **dadurch gekennzeichnet, daß** der Arbeitsraum (30) in einem Gehäuse (32) begrenzt ist, das in einem Raum (38) angeordnet ist, der mit einem Edelgas, vorzugsweise Argon, gefüllt ist.

11. Verfahren nach einem der vorstehenden Ansprüche, **dadurch gekennzeichnet, daß** die Glasröhre (10) einen Brenner einer Entladungslampe, insbesondere für die Verwendung in Kraftfahrzeugscheinwerfern, bildet.

12. Verfahren nach Anspruch 11, **dadurch gekennzeichnet, daß** der Hohlraum (12) als Füllstoffe Quecksilber und Iod-Salze enthält.

## Claims

1. Method for producing a seal of a hollow chamber (12) of a glass tube (10) wherein the hollow chamber (12) contains fillers at a pressure greater than that of the atmosphere, **characterized in that** the glass tube (10) is disposed in a working chamber (30) in which a pressure is generated that is greater than the pressure prevailing in the hollow chamber (12) and **in that** in the working chamber (30) a heating unit (50) is arranged, which encompasses the glass tube (10) in a section (16) adjoining the hollow chamber (12) on at least one end and which melts the section (16) so that when melted, it is squeezed together by the pressure prevailing in the working chamber (30), thus sealing the hollow chamber (12) on at least one end.

2. Method according to claim 1, **characterized in that** during the production of the seal, the hollow chamber (12) is supplied with a gaseous filler at the required pressure from outside the working chamber (30).

3. Method according to claim 2, **characterized in that** an inert gas is used as the gaseous filler, preferably xenon, argon, or krypton at a pressure of at least approximately 7 bar.

4. Method according to one claims 1 to 3, **characterized in that** the heating unit (50) is an electric heating unit.

5. Method according to claim 4, **characterized in that** the heating unit (50) is comprised alternatively of graphite, tantalum, molybdenum, osmium, rhenium, or tungsten, or of a mixture of these materials.

6. Method according to one of the preceding claims, **characterized in that** the working chamber (30) is supplied with an inert gas, preferably helium.

7. The method according to one of the preceding claims, **characterized in that** a sensor unit (54) is provided that detects the state of the glass tube (10) in the region (16) to be melted and generates a signal, which is proportional to the temperature of this region (16) and is used to control the heating capacity of the heating unit (50).

8. The method according to one of the preceding claims, **characterized in that** the heating capacity of the heating unit (50) is controlled as a function of the wall thickness of the region (16) of the glass tube (10) to be melted.

9. The method according to one of the preceding claims, **characterized in that** the pressure prevailing in the working chamber (30) and/or the heating capacity of the heating unit (50) is/are variably controlled during the production of the seal of the hollow chamber (12)

10. The method according to one of the preceding claims, **characterized in that** the working chamber (30) is delimited in a housing (32) that is disposed in a chamber (38) that is filled with an inert gas, preferably argon.

11. The method according to one of the preceding claims,
**characterized in that** the glass tube (10) constitutes a burner of a discharge lamp, in particular for use in motor vehicle headlights.

12. The method according to claim 11, **characterized in that** the hollow chamber (12) contains mercury and iodise-salts as fillers.

## Revendications

1. Procédé de fabrication d'une fermeture d'un espace creux (12) d'un tube de verre (10), des charges se trouvant dans l'espace creux (12) sous pression plus élevée que la pression atmosphérique, **caractérisé en ce que** le tube de verre (10) est disposé dans un espace de travail (30) dans lequel une pression plus élevée que la pression régnant dans l'espace creux (12) est produite et **en ce qu'**un dispositif de chauffage (50) est disposé dans l'espace de travail (30), lequel entoure le tube de verre (10) dans une portion (16) se raccordant au moins d'un côté à l'espace creux (12) et au moyen duquel la portion (16) est fondue et est comprimée dans l'état fondu par la pression régnant dans l'espace de travail (30), de sorte que l'espace creux (12) soit fermé sur au moins un côté.

2. Procédé selon la revendication 1, **caractérisé en ce que** l'on achemine à l'espace creux (12) pendant la fabrication de la fermeture, depuis l'extérieur de l'espace de travail (30), une charge gazeuse à la pression nécessaire.

3. Procédé selon la revendication 2, **caractérisé en ce que** l'on fournit sous forme de charge gazeuse un gaz rare, de préférence du xénon, de l'argon ou du krypton sous une pression d'au moins environ 7 bars.

4. Procédé selon l'une quelconque des revendications 1 à 3, **caractérisé en ce que** le dispositif de chauffage (50) est un dispositif de chauffage électrique.

5. Procédé selon la revendication 4, **caractérisé en ce que** le dispositif de chauffage (50) se compose en variante de graphite, de tantale, de molybdène, d'osmium, de rhénium ou de tungstène ou d'un mélange de ces matériaux.

6. Procédé selon l'une quelconque des revendications précédentes, **caractérisé en ce que** l'on achemine à l'espace de travail (30) un gaz rare, de préférence de l'hélium.

7. Procédé selon l'une quelconque des revendications précédentes, **caractérisé en ce que** l'on prévoit un dispositif de capteur (54) permettant de détecter l'état du tube de verre (10) dans la région (16) devant être fondue et permettant de produire un signal proportionnel à la température de cette région (16), lequel est utilisé pour la commande de la puissance de chauffage du dispositif de chauffage (50).

8. Procédé selon l'une quelconque des revendications précédentes, **caractérisé en ce que** la commande de la puissance de chauffage du dispositif de chauffage (50) s'effectue en fonction de l'épaisseur de paroi de la région (16) du tube de verre (10) devant être fondue.

9. Procédé selon l'une quelconque des revendications précédentes, **caractérisé en ce que** la pression régnant dans l'espace de travail (30) et/ou la puissance de chauffage du dispositif de chauffage (50) sont commandées de manière variable pendant la fabrication de la fermeture de l'espace creux (12).

10. Procédé selon l'une quelconque des revendications précédentes, **caractérisé en ce que** l'espace de travail (30) est limité dans un boîtier (32) qui est disposé dans un espace (38) qui est rempli d'un gaz rare, de préférence de l'argon.

11. Procédé selon l'une quelconque des revendications précédentes, **caractérisé en ce que** le tube de verre (10) forme un brûleur d'une lampe à décharge, notamment pour l'utilisation dans des phares de véhicules automobiles.

12. Procédé selon la revendication 11, **caractérisé en ce que** l'espace creux (12) contient en tant que charge du mercure et des sels d'iode.
